(19) Europäisches Patentamt
European Patent Office
Office européen des brevets

(11) **EP 2 498 107 A2**

(12) **EUROPEAN PATENT APPLICATION**


(43) Date of publication:
**12.09.2012 Bulletin 2012/37**

(51) Int Cl.:
***G02B 5/30*** *(2006.01)*

(21) Application number: **12171276.4**

(22) Date of filing: **27.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **30.08.2007 US 897899**

(62) Document number(s) of the earlier application(s) in accordance with Art. 76 EPC:
**08795613.2 / 2 185 955**



(71) Applicant: **Corning Incorporated**
**Corning, New York 14831 (US)**

(72) Inventor: **O'Malley, Shawn M.**
**Horseheads, NY 14831 (US)**

(74) Representative: **Sturm, Christoph**
**Quermann Sturm Weilnau**
**Patentanwälte**
**Unter den Eichen 7**
**65195 Wiesbaden (DE)**


Remarks:
This application was filed on 08-06-2012 as a divisional application to the application mentioned under INID code 62.

(54) **Light-polarizing article and process for making same**


(57) A process wherein a polymer, such as DNA, having a defined chemical composition and size is used to template the alignment of polarizing species, such as optically active organic dyes or metal nanoparticles having defined compositional characteristics and/or size and shape characteristics, on a surface to manufacture a thin film polarizer; a process where metal nanorods are aligned on a substrate surface or inside a substrate to make a polarizer; and a polarizer thus made. Multi-layered polarizing structure can be created by using the process of the present invention.


**FIG. 2**

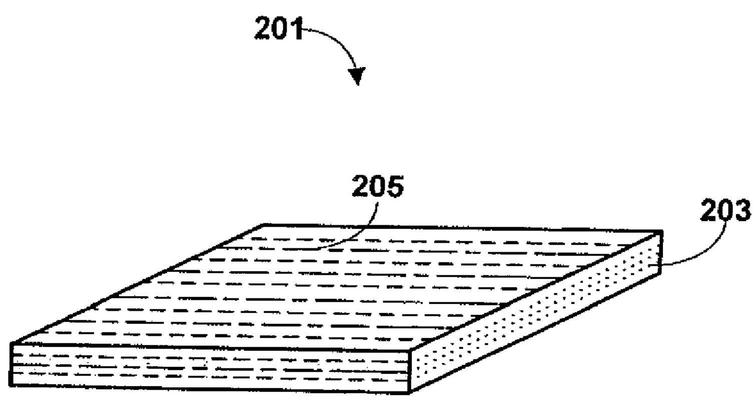


EP 2 498 107 A2

## Description

CROSS-REFERENCED TO RELATED APPLICATIONS

This application claims the benefit of priority to U.S. application no. 11/897,899, filed on August 30, 2007, which is incorporated by reference herein.

TECHNICAL FIELD

The present invention relates to light-polarizing articles and process for making the same. In particular, the present invention relates to light-polarizing articles comprising orderly distributed light-polarizing species on or within a substrate and process for making such light-polarizing article by using an organic templating material or metal nanorods. The present invention is useful, e.g., in making light polarizers having desired polarizing properties in a wide range of wavelength.

BACKGROUND

A polarizer is a device that converts an unpolarized or mixed-polarization beam of electromagnetic waves (e.g., light) into a beam with a single polarization state (usually, a single linear polarization). Polarizers are used in many optical techniques and instruments, and polarizing filters find applications in photography and liquid crystal display technology.

The simplest polarizer in concept is the wire-grid polarizer, which consists of a regular array of fine parallel metallic wires, placed in a plane perpendicular to the incident beam. Electromagnetic waves which have a component of their electric fields aligned parallel to the wires induce the movement of electrons along the length of the wires. Since the electrons are free to move, the polarizer behaves in a similar manner as the surface of a metal when reflecting light; some energy is lost due to Joule heating in the wires, and the rest of the wave is reflected backwards along the incident beam.

For waves with electric fields perpendicular to the wires, the electrons cannot move very far across the width of each wire; therefore, little energy is lost or reflected, and the incident wave is able to travel through the grid. Since electric field components parallel to the wires are absorbed or reflected, the transmitted wave has an electric field purely in the direction perpendicular to the wires, and is thus linearly polarized. Simply stated, only light traveling in a certain direction passes through the polarizer, and the rest of the light is absorbed or reflected.

For practical use, the separation distance between the wires must be less than the wavelength of the radiation, and the wire width should be a small fraction of this distance. This means that wire-grid polarizers are generally only used for microwaves and for far- and mid-infrared light. Using advanced lithographic techniques, very tight pitch metallic grids can be made which polarize visible light. Since the degree of polarization depends little on wavelength and angle of incidence, they are used for broad-band applications such as projection.

Certain crystals, due to the effects described by crystal optics, show dichroism, a preferential absorption of light which is polarized in a particular direction. They can therefore be used as polarizers. The best known crystal of this type is tourmaline. However, this crystal is seldom used as a polarizer, since the dichroic effect is strongly wavelength dependent and the crystal appears colored.

Polaroid film was in its original form an arrangement of many microscopic herapathite crystals. Its later H-sheet form is rather similar to the wire-grid polarizer. It is made from polyvinyl alcohol (PVA) plastic with an iodine doping. Stretching of the sheet during manufacture ensures that the PVA chains are aligned in one particular direction. Electrons from the iodine dopant are able to travel along the chains, ensuring that light polarized parallel to the chains is absorbed by the sheet; light polarized perpendicularly to the chains is transmitted. The durability and practicality of Polaroid makes it the most common type of polarizer in use, for example for sunglasses, photographic filters, and liquid crystal displays. It is also much cheaper than other types of polarizer.

An important modem type of absorptive polarizer is made of elongated silver nanoparticles embedded in glass. These polarizers are more durable and can polarize light much better than Polaroid film, with low absorption of correctly-polarized light. Such glass polarizers are widely used in optical fiber communications. The best known polarizer in this category is Polarcor®, made by Coming Incorporated, Coming, New York.

Current processes for making blue and UV polarizers typically involve high-resolution lithography. They demand expensive equipment and tight process control. Therefore, there remains a need for quality and affordable polarizers in the blue and UV wavelength regions and an alternative process for making such polarizers.

SUMMARY OF DISCLOSURE

According to a first aspect of the present invention, provided is a light-polarizing article comprising:

(A) a substrate; and
(B) an ordered structure on a surface of the substrate, the ordered structure comprising:

(B1) an aligned template polymer having defined composition, chain size and chain configuration; and
(B2) a light-polarizing species affixed to the template polymer in a spatially specific manner.

In certain embodiments of the light-polarizing article of the first aspect of the present invention, the template polymer is selected from a polynucleic acid, polyaniline, a cellulose, and compatible mixtures and combinations thereof.

In certain embodiments of the light-polarizing article of the first aspect of the present invention, the light-polarizing species is an organic light-polarizing dye.

In certain embodiments of the light-polarizing article of the first aspect of the present invention, the light-polarizing species is an elemental metal. In certain embodiments, the elemental metal is selected from Al, Ag, Au, Cu, Cr, Fe, Ni, Mo, W, Re, Os, Ir, Pt, Pd, Rh, Ru, and compatible mixtures and combinations thereof.

In certain embodiments of the light-polarizing article of the first aspect of the present invention, the elemental metal is present in the form of nanorods having a length/width aspect ratio of at least 3:1, and a width greater than 2 nm.

In certain embodiments of the light-polarizing article of the first aspect of the present invention, the light-polarizing article further comprises:

(C) a protective layer encapsulating the ordered structure.

In certain embodiments of the light-polarizing article of the first aspect of the present invention comprising a protective layer (C), the protective layer is selected from a low-melt inorganic glass and a polymer layer and combinations thereof.

A second aspect of the present invention is a light-polarizing article comprising

(a) a substrate; and
(b) an ordered structure on a surface of the substrate consisting essentially of a plurality of aligned elemental metal nanorods having a length/width aspect ratio of at least 3:1, and a width of greater than 2 nm.

In certain embodiments of the light-polarizing article of the second aspect of the present invention, the elemental metal nanorods are selected from nanorods of Al, Ag, Au, Cu, Cr, Fe, Ni, Mo, W, Re, Os, Ir, Pt, Pd, Rh, Ru, and compatible mixtures and combinations thereof.

In certain embodiments of the light-polarizing article of the second aspect of the present invention, the light-polarizing article further comprises:

(c) a protective layer encapsulating the ordered structure.

In certain embodiments of the light-polarizing article of the second aspect of the present invention comprising a protective layer (c) above, the protective layer is selected from a low-melt inorganic glass and a polymer layer.

A third aspect of the present invention is a light-polarizing article comprising:

(A) a substrate; and
(B) a plurality of aligned elemental metal nanorods having a length/width aspect ratio of at least 3:1, and a width of greater than 2 nm, distributed throughout the substrate, providing the light-polarizing function.

In certain embodiments of the light-polarizing article of the third aspect of the present invention, the elemental metal nanorods are selected from nanorods of Al, Ag, Au, Cu, Cr, Fe, Ni, Mo, W, Re, Os, Ir, Pt, Pd, Rh, Ru, and compatible mixtures and combinations thereof.

A fourth aspect of the present invention is a process for making a light-polarizing article comprising a substrate and an ordered structure of a light-polarizing species on a surface of the substrate, comprising:

(I) providing a template polymer having a defined composition, chain size and chain configuration;
(II) affixing a light-polarizing species to the template polymer in a spatially specific manner; and
(III) contacting the template polymer with a surface of the substrate and aligning the chain of the template polymer

on the surface.

In certain embodiments of the process of the fourth aspect of the present invention, the process further comprises the following step (IV) after steps (II) and (III): (IV) encapsulating the light-polarizing species with a protective layer.

In certain embodiments of the process of the fourth aspect of the present invention, step (II) precedes step (III).

In certain embodiments of the process of the fourth aspect of the present invention, step (III) precedes step (II).

In certain embodiments of the process of the fourth aspect of the present invention, the template polymer has a scaffold structure.

In certain embodiments of the process of the fourth aspect of the present invention, the template polymer is selected from a polynucleic acid, polyaniline, a cellulose, and compatible mixtures and combinations thereof.

In certain embodiments of the process of the fourth aspect of the present invention, step (I) comprises:

(IA) controlling the size distribution of template polymer by chemical fragmentation, mechanical fragmentation or chromatography.

In certain embodiments of the process of the fourth aspect of the present invention, the light-polarizing species is an organic light-polarizing dye.

In certain embodiments of the process of the fourth aspect of the present invention, the light-polarizing species is a metal.

In certain embodiments of the process of the fourth aspect of the present invention, the light-polarizing species is a metal selected from Al, Ag, Au, Cu, Cr, Fe, Ni, Mo, W, Re, Os, Ir, Pt, Pd, Rh, Ru, and combinations thereof.

In certain embodiments of the process of the fourth aspect of the present invention, step (II) comprises:

(II-1) contacting a plurality of metal ions with the template polymer;
(II-2) binding the metal ions with the template polymer at a plurality of locations on the chain of the template polymer; and
(II-3) reducing the metal ions into elemental metal.

In certain embodiments of the process of the fourth aspect of the present invention, step (II) comprises:

(IIA) providing an ion-associating agent comprising a functional site reactive with the template polymer;
(IIB) binding the template polymer with the functional sites of a plurality of the ion-associating agent at a plurality of locations on the chain of the template polymer;
(IIC) binding a plurality of metal ions with the ion-associating agents bound with the template polymer to form metal complexes; and
(IID) reducing the metal ions into elemental metal.

In certain embodiments of the process of the fourth aspect of the present invention, step (II) comprises:

(IIa) providing a complex comprising (i) a metal ion and (ii) an ion-associating agent comprising a functional site reactive with the template polymer;
(IIb) binding the template polymer with the functional sites of a plurality of the ion-associating agent at a plurality of locations on the chain of the template polymer; and
(IIc) reducing the metal ions into elemental metal.

In certain embodiments of the process of the fourth aspect of the present invention, step (III) comprises:

(IIIA) forming a nanofiber of template polymer by electrospinning from a probe; and
(IIIB) depositing the nanofiber on a surface of the substrate to form an aligned structure thereof.

In certain embodiments of the process of the fourth aspect of the present invention, step (II) further comprises:

(II-4) forming nanorods of the elemental metal.

In certain embodiments of the process of the fourth aspect of the present invention, a step (IIIA) as follows is implemented after steps (II) and (III):

(IIIa) removing the template polymer from the surface of the substrate to leave aligned metal as the light-polarizing

species on the surface.

In certain embodiments of the process of the fourth aspect of the present invention comprising a step (IIIa), step (IIIa) comprises subjecting the template polymer to calcining in an inert or reducing atmosphere.
In certain embodiments of the process of the fourth aspect of the present invention comprising a step (IIIa), step (IIIa) comprises subjecting the template polymer to calcining in a reducing atmosphere whereby: the template polymer is essentially removed and a metal ion, if any, associated with the template polymer, is reduced into elemental state.
In certain embodiments of the process of the fourth aspect of the present invention comprising a step (IV) above, in step (IV): the protective layer is selected from: a polymer layer; a low melt inorganic glass layer; a spin-on glass material; and combinations thereof.
A fifth aspect of the present invention relates to a process for making a light-polarizing article comprising a substrate and an ordered structure of a light-polarizing species on a surface of the substrate, comprising:

(i) providing a plurality of nanorods of an elemental metal;
(ii) affixing the nanorods onto a surface of the substrate, and aligning them in a spatially specific manner such that the aligned nanorods are capable of providing light-polarizing properties at the interested wavelength.

In certain embodiments of the process of the fifth aspect of the present invention, the process further comprises the following step (iii) after step (ii):

(iii) encapsulating the nanorods with a protective layer.

In certain embodiments of the process of the fifth aspect of the present invention comprising step (iii) above, in step (iii), the protective layer is selected from: a polymer layer; a low melt inorganic glass layer; a spin-on glass layer; and combinations thereof.
In certain embodiments of the process of the fifth aspect of the present invention, the nanorods have a length/width aspect ratio of at least 3.
In certain embodiments of the process of the fifth aspect of the present invention, the nanorods have a width from 2 nm to 500 nm.
A sixth aspect of the present invention relates to process for making a light-polarizing article comprising:

(1) providing a plurality of nanorods of an elemental metal;
(2) mixing the nanorods with a batch mixture of a glass material;
(3) heating the material resulting from step (2) to form a continuous glass material having the nanorods distributed therein;
(4) stretching the glass resulting from step (3) such that the nanorods align inside the bulk of the glass.

In certain embodiments of the process of the sixth aspect of the present invention, step (1) comprises providing the plurality of nanorods by a process selected from: polymer templating; micelle based surfactant self-assembly; controlled nanoparticle self-assembly; electrolysis; and combinations thereof.
In certain embodiments of the process of the sixth aspect of the present invention, in step (2), the batch mixture comprises a reducing agent capable of inhibiting oxidation of the metal nanorods during step (3).
In certain embodiments of the process of the sixth aspect of the present invention, in step (1), the nanorods provided has an optically active composition and dimension at the interested wavelength where polarizing effect is desired.
In certain embodiments of the process of the sixth aspect of the present invention, wherein in at least one of steps (2), (3), (4) and a subsequent step, the nanorods are converted into an optically active state at an interested wavelength where polarizing effect is desired.
In certain embodiments of the process of the sixth aspect of the present invention, the process further comprises the following step (5) after step (4):

(5) encapsulating the nanorods with a protective layer.

In certain embodiments of the process of the sixth aspect of the present invention, in step (5), the protective layer is selected form a polymer layer, a low melt inorganic glass layer, and combinations thereof.
In certain embodiments of the process of the sixth aspect of the present invention, the nanorods have a length/width aspect ratio of at least 3.
In certain embodiments of the process of the sixth aspect of the present invention, the nanorods have a width

of from 2 nm to 500 nm.

One or more embodiments of the present invention have one or more of the following advantages. (1) Use of a polymeric template, in particular DNA for which well known means for preparing structures having specific, controllable chemical and size and shape characteristics are available , can provide well defined aspect ratio organic and inorganic templated materials that are not easily obtainable by other means. (2) A broad range of metals and optically active organic structures having a range of polarization properties are associable with the DNA templates, making possible a range of polarization wavelengths. (3) The density of the templated material on a surface is controllable by dilution or by multilayered processes. (4) The templated material can be readily aligned on a surface by a number of means, prior to encapsulation in glass. This results in more efficient particle alignment (and more efficient polarization), in contrast to the current process of post encapsulation alignment of metal particles by glass drawing. (5) Encapsulation can make the nanotemplated optically modified surface stable to environmental stresses such as heat and photochemical and chemical damage. (6) The templating/encapsulation process may be used to prepare structures with additional and/or composite optical properties by assembling polarizing films in series. These can include cross polarizers and negative refractive index materials, or complex admixtures of optical properties such as filter plus cross polarizer combinations. (7) Polarcor™ products currently use either silver or copper metal particles which can be limiting in spectral selection. By facilitating the production of nanoparticles from a range of metals and with a range of aspect ratios the process of this invention greatly expands the range of spectral selection - particularly in the blue region where practical solutions have been sought for some time.

Additional features and advantages of the invention will be set forth in the detailed description which follows, and in part will be readily apparent to those skilled in the art from the description or recognized by practicing the invention as described in the written description and claims hereof, as well as the appended drawings.

It is to be understood that the foregoing general description and the following detailed description are merely exemplary of the invention, and are intended to provide an overview or framework to understanding the nature and character of the invention as it is claimed.

The accompanying drawings are included to provide a further understanding of the invention, and are incorporated in and constitute a part of this specification.

## BRIEF DESCRIPTION OF THE DRAWINGS

In the accompanying drawings:

FIG. 1 is a schematic illustration of the structure of the light-polarizing article according to one embodiment of the present invention.

FIG. 2 is a schematic illustration of the structure of the light-polarizing article according to another embodiment of the present invention.

FIG. 3 is a microscopic image of aluminum metalized fish DNA aligned on a glass surface.

FIG. 4 is a schematic illustration of electro-spinning process for making DNA film.

FIG. 5 is a schematic illustration of the set-up of an apparatus for depositing low-melt-glass onto a substrate coated with metalized DNA.

## DETAILED DESCRIPTION

Unless otherwise indicated, all numbers such as those expressing weight percents of ingredients, dimensions, and values for certain physical properties used in the specification and claims are to be understood as being modified in all instances by the term "about." It should also be understood that the precise numerical values used in the specification and claims form additional embodiments of the invention. Efforts have been made to ensure the accuracy of the numerical values disclosed in the Examples. Any measured numerical value, however, can inherently contain certain errors resulting from the standard deviation found in its respective measuring technique.

As used herein, in describing and claiming the present invention, the use of the indefinite article "a" or "an" means "at least one," and should not be limited to "only one" unless explicitly indicated to the contrary. Thus, for example, reference to "a nucleic acid" includes embodiments involving one or more nucleic acid, unless the context clearly indicates otherwise.

The light-polarizing articles of the present invention can be a light polarizer for use in or with any optical devices or system, such as a camera system, a display device, a telecommunication device, a light source, an ophthalmic lens, and a window fixture. Depending on the application, the light polarizing article of the present invention may provide a light-polarizing function, i.e., selectively filtering an incident light to provide a polarizing light. The light-polarizing article of the present invention can be a linear polarizer, a circular polarizer, and a cross-polarizer. The light-polarizing article of the present invention may provide light-polarizing function in a single limited wavelength range, such as in the IR, in the red spectrum, in the full visible spectrum, in the blue spectrum, or in a UV wavelength range. The light-polarizing

article of the present invention may provide light-polarizing function in multiple discontinuous wavelength ranges. The polarization direction of the filtered light in those differing wavelength ranges may be substantially identical or substantially different. The technology of the present invention can be utilized to produce light-polarizing articles of any and all these kinds.

An interesting category of the light-polarizing article of the present invention is an absorptive polarizer. In case of absorptive polarizer, the light-polarizing article of the present invention desirably comprises a substrate, transmissive at the interested wavelength where polarization effect is desired, comprising and/or bearing a light-polarizing species. The substrate can be made of any material, desirably a solid material, such as an inorganic glass material (e.g., a soda-lime glass, a borosilicate glass, fused quartz or silica glass, or an aluminosilicate glass), a glass-ceramic material (such as a transparent β-quartz glass-ceramic, or Zerodur®), an inorganic crystalline material ($CaF_2$, $MgF_2$, ZnTe, or sapphire), a polymer (thermoplastic, thermosetting, or liquid-crystal), an inorganic-organic composite material, and combinations and mixtures thereof.

An ordered distribution of a light-polarizing species on a surface of the substrate and/or inside the bulk of the substrate is necessary for the light-polarizing article of the present invention to provide light-polarizing function. In certain embodiments, the light-polarizing species are aligned in a substantially parallel fashion to impart the light-polarizing function to the light-polarizing article of the present invention.

The light-polarizing species in a light-polarizing article of the present invention can be organic or inorganic. Non-limiting examples of organic light-polarizing species include those listed in TABLE I below.

TABLE I

| | |
|---|---|
| acridine orange | 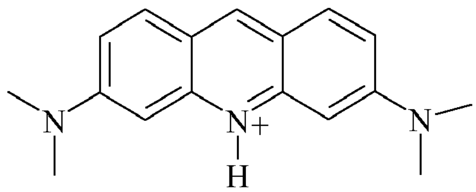 |
| ethidium bromide | 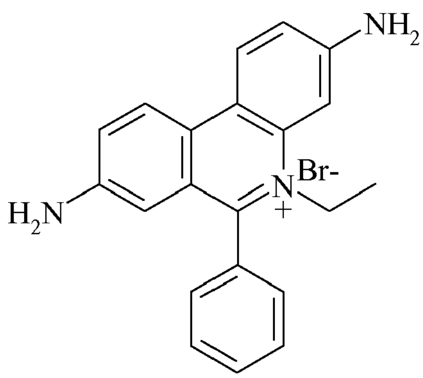 |
| DAPI | 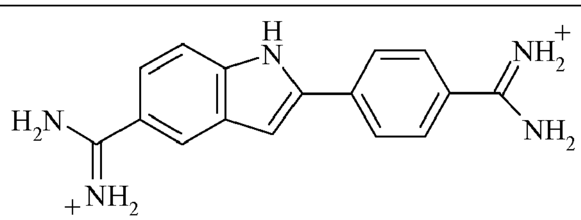 |
| Rhodamine B | 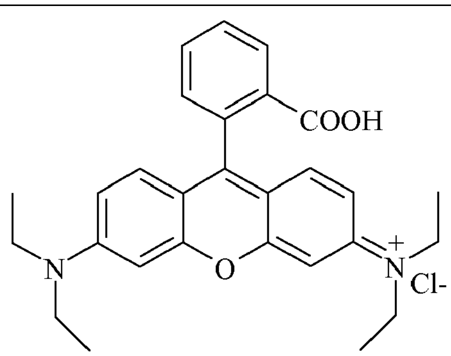 |

(continued)

| | |
|---|---|
| Hoechst 33258 | 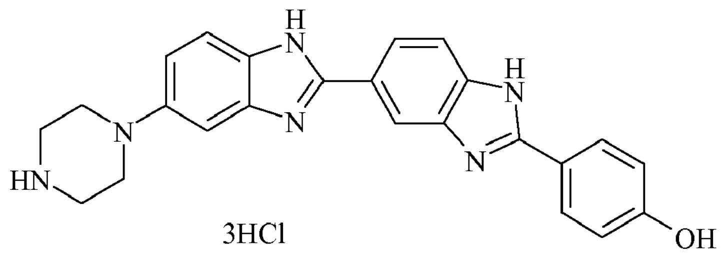 |
| Thiazole orange | 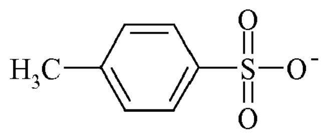 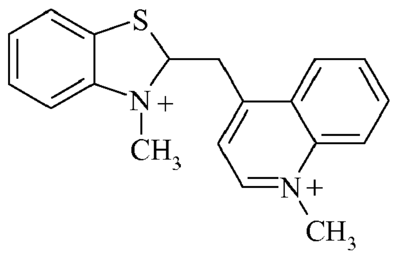 |
| YOYO | 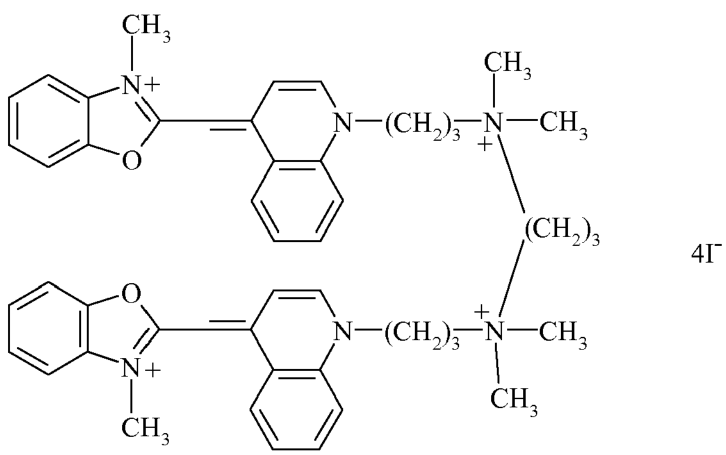 |
| Ethidium Homodimer | 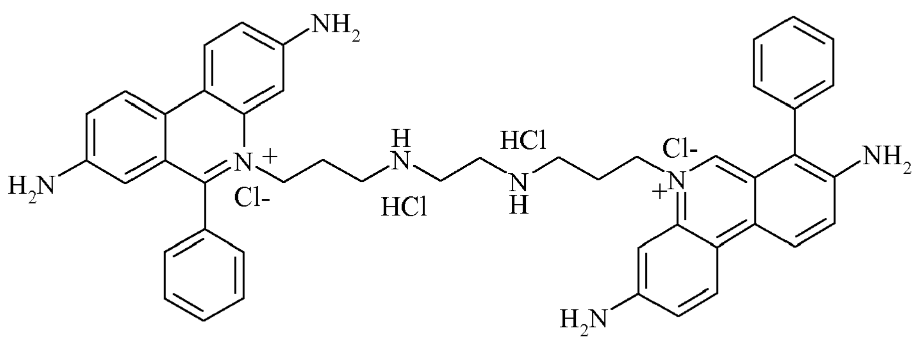 |

Inorganic light-polarizing species in a light-polarizing article of the present invention can be, but are not limited to, iodine, an elemental metal such as Al, Ag, Au, Cu, Cr, Fe, Ni, Mo, W, Re, Os, Ir, Pt, Pd, Rh, Ru, and combinations and mixtures thereof. Different metal can be used to provide polarizing function in different wavelength ranges. In cross-polarizers, and other polarizers having polarizing function in multiple continuous or discontinuous wavelength ranges, multiple metals may be used in a light-polarizing article of the present invention. In certain embodiments, the light-polarizing species are nanorods of elemental metals. In certain embodiments, the metal nanorods have a length/width aspect ratio of at least 3, in certain embodiments at least 5, in certain other embodiments at least 8, in certain other

embodiments at least 15, in certain other embodiments at least 20. In certain other embodiments, the metal nanorods have a width (diameter) of at least 2 nm, in certain embodiments at least 5 nm, in certain embodiments at least 10 nm, in certain embodiments at least 50 nm, in certain embodiments at least 50 nm, in certain embodiments less than 500 nm.

In certain embodiments of the light-polarizing article of the present invention, one or more light-polarizing species are distributed substantially only on the surface of the substrate. In certain other embodiments of the light-polarizing article of the present invention, one or more light-polarizing species are distributed substantially only within a single light-polarizing thin layer on a surface of the substrate or within the bulk of the substrate. In certain other embodiments, one or more light-polarizing species are distributed within a plurality of thin layers over a surface of the substrate or within the bulk of the substrate. The multiple light-polarizing layers may form a continuous layered structure without an intermediate layer essentially free of a light-polarizing species. In other embodiments, the multiple light-polarizing layers may form a discontinuous layered structure comprising one or more intermediate layers essentially free of a light-polarizing species.

In certain embodiments of the light-polarizing article of the present invention, it is desired that the light-polarizing species is encapsulated by a protective layer. The protective layer can comprise a layer of inorganic glass material, a layer of organic and/or inorganic polymer material, a layer of spin-on glass material, and compatible mixtures and combinations thereof. A major function of the protective layer is to stabilize the light-polarizing species and structure thereof such that the light-polarizing function can be preserved at a desired level during the service life of the light-polarizing article. Typically, it is desired that the protective layer is transmissive at the interested wavelength range at which polarizing function is desired.

In addition to the light-polarizing species, a light-polarizing article of the present invention may further comprise a template polymer to which the light-polarizing species are affixed in a spatially specific manner.

By "spatially specific" is meant the light-polarizing species are affixed to the template polymer in a way such that when the template polymer molecules are properly aligned, the light-polarizing species affixed thereto would impart desired light-polarizing function. In certain embodiments, the association of light polarizing species on the polymer allows for a homogeneous directional absorbance or reflectance relative to incident light when both the polymer scaffold and light-polarizing agents are aligned together. The light-polarizing species located on the polymer scaffold will be in sufficient quantity to yield a desired optical activity, percent transmittance and polarization efficiency. The polymer may be organic or inorganic and may by itself possess intrinsic absorbance. This intrinsic absorbance of the polymer by itself without the need for light-polarizing species when aligned may also yield a desired range of polarized wavelength activity. The light-polarizing species can be affixed to the template polymer by direct association, chemical retention or growth through a "seeding process" on the polymer. The combination of the polymer and the light-polarizing species acquires the optical activity (e.g. absorbance) of the non-intrinsic light-polarizing species. When the admixture of the light-polarizing species and polymer scaffold are sufficiently aligned on a surface or in a matrix they provide a "vectorial directionality" to light absorbance. That is to say that the incident light is substantially absorbed along one axis of propagation. Non-limiting examples of light-polarizing species can be metals, dichroic organic agents, and iodine.

Templating refers to the process of affixing a light-polarizing species onto a polymer chain. The polymer chain, desirably of a scaffold structure, is of a desired structure, size distribution, persistence of length and rigidity. The "template polymer" may comprise more than one polymer. For example, a double-stranded DNA or "duplex DNA" is comprised of two separate single polymeric strands. However, even triplex DNA strands are known to exist and allow for formation of a defined structure. It is also contemplated that the templated polymer scaffold(s) may be combined with additional "non-templating polymer(s)" to yield a desired optical activity. For example, the template polymer may be combined with another polymer for film casting and processing techniques. One skilled in the art will recognize that the polynucleic acid is here used as a model example and these principles can be applied to other polymeric systems.

The process of affixing light-polarizing species onto the templating polymer scaffold may include physical forces, chemical associations and/or chemical bond formation. Some examples would include but are not limited to ionic bond formation, steric retention, chemical cross-linking, intercalation, hydrogen bonds, Vander Waal forces, sequence specific hybridization, chemical grafting, hydrophobic, electrostatic attraction and any combinations thereof. In some cases the light polarizing agents and their precursors may be considered as ligands. Ligands may interact with DNA by covalently binding, electrostatcially binding, or intercalating. Polynucleic acids can have specific structural interactions which advantageously yield associations with light polarizing agents. For example, rare earth ions can associate with the negatively charged phosphate backbone of DNA with high affinity. Ethidium bromide, proflavine, daunomycin, doxorubicin are examples of intercalating dyes. Intercalators can locate onto the polymeric scaffold through stereo-specific association and fit in between the inner base pairs of the duplex DNA. Often intercalators have a planar geometry with aromatic or polycyclic structure.

Metal nanoparticles can be chemically functionalized so as to enable chemical bond formation with double or single DNA strands. The sequence of these attached DNA strands to the metal can be made to associate with the complimentary sequence DNA strands in a polynucleic acid template. In addition, metal ions can be templated onto the polymer scaffold as precursor metals and subsequently reduced to yield a ground state metal. The bases of DNA can

also be modified to allow for binding of precursor metal ions and thus subsequently enable metallization. It is important to note that the resultant metal structure from templating may also be used itself as a template for subsequent metallization. That is to say that the ground state of the metal nanorods can provide a surface for in situ growth of other metals much like a core-shell structure.

In certain embodiments, the template polymer together with the light-polarizing species forms the light-polarizing ordered structure of the light-polarizing article of the present invention. It is desired that the template polymer has a defined structure, chain length and chain configuration. In certain embodiments, it is desired that the template polymer has a scaffold structure. In certain embodiments, each template polymer chain is affixed to a single light-polarizing species. In certain other embodiments, each template polymer molecule is affixed to a plurality of light-polarizing species. In certain embodiments, each template polymer molecule is bonded to a single light-polarizing molecule. In certain other embodiments, each template polymer molecule is bonded to a plurality of light-polarizing molecules. A highly ordered structure with defined unit length, configuration and composition can be formed from a template polymer with defined and controlled structure, composition and configuration.

Non-limiting examples of template polymers are: polynucleic acids such as DNAs (single-stranded, double-stranded, or triple-stranded, synthetic or natural) and RNAs; modified polynucleic acids such as DNAs and RNAs having additional functional chemical groups affixed thereto; a cellulose (natural or synthetic); and polyaniline. It is known that some base pairs on the polymer scaffold structure of a double-stranded DNA has the ability to bind with metal ions to form metal complexes, and a single DNA with multiple such base pairs can bind with a plurality of metal ions. In certain embodiments, it is highly desired that the template polymer has a narrow molecular weight distribution characterized by the polydispersity index (PI) of the polymer. Polydispersity index (PI) of the template polymer is defined as the ratio of the weight average molecular weight ($\overline{M_w}$) to the number average molecular weight ($\overline{M_n}$) of all the molecules of the template polymer:

$$PI = \frac{\overline{M_w}}{\overline{M_n}}.$$

In certain embodiments, PI ≤ 1.5. In certain other embodiments, PI ≤ 1.2. Still in certain other embodiments, PI ≤ 1.1. In the case of DNA, it is desired in certain embodiments that the DNA has an average length of from 10 to 1000 base pairs (bp), in certain embodiments from 20 to 800 base pairs, in certain other embodiments from 20 to 500 base pairs, in certain other embodiments from 50 to 500 base pairs, in certain other embodiments from 100 to 500 base pairs. In certain embodiments, it is desired that the standard deviation of all the length of all the molecules of the DNA template polymer in the light-polarizing article of the present invention is less than or equal to 50 base pairs, in certain embodiments less than or equal to 30 base pairs, in certain other embodiments less than or equal to 20 base pairs, in certain other embodiments less than or equal to 10 base pairs. Typically, in order to obtain an article with high polarization performance, a highly ordered structure of the template polymer and the light-polarizing species is desired. A more uniform chain length of the template polymer can lead to a more orderly distribution of the light-polarizing species in the light-polarizing article, hence better light-polarization performance. Various approaches can be utilized to obtain a tight molecular weight distribution of the template polymer such as DNA, as detailed infra in the description of the various aspects of the process of the present invention.

Therefore, as described summarily supra, one genus of the light-polarizing article of the present invention, which constitutes the first aspect of the present invention, comprises:

(A) a substrate; and
(B) an ordered structure on a surface of the substrate, the ordered structure comprising:

(B1) an aligned template polymer having defined composition, chain size and chain configuration; and
(B2) a light-polarizing species affixed to the template polymer in a spatially specific manner.

Another genus of the light-polarizing article of the present invention, which constitutes a second aspect of the present invention, comprises:

(a) a substrate; and
(b) an ordered structure on a surface of the substrate consisting essentially of a plurality of aligned elemental metal nanorods having a length/width aspect ratio of at least 3:1, and a width of greater than 2 nm.

Still another genus of the light-polarizing article of the present invention, which constitutes the third aspect of

the present invention, comprises:

(A) a substrate; and

(B) a plurality of aligned elemental metal nanorods having a length/width aspect ratio of at least 3:1, and a width of greater than 2 nm, distributed throughout the substrate, providing the light-polarizing function.

The different genera of the light-polarizing articles of the present invention may be prepared by one or more embodiments of the processes of the present invention, described summarily supra and in detail infra. FIGS. 1 and 2 schematically illustrate the structures of two embodiments of the light-polarizing article of the present invention. Shown in FIG. 1 is a polarizer 101 comprising a substrate 103, and a light-polarizing layer 103 comprising an ordered structure of light-polarizing species (such as a plurality of metal nanorods aligned essentially in parallel to each other) on a surface of the substrate 103. A top protective layer 107 over the light-polarizing layer 105 is also illustrated. FIG. 2 illustrates a polarizer 201 comprising a substrate 203 comprising a plurality of light-polarizing species 205 (such as a plurality of metal nanorods aligned essentially in parallel to each other) distributed throughout the bulk of the substrate (and in the region in proximity to the surface of the substrate 203 as well).

One category of the process of the present invention, which constitutes the fourth aspect of the present invention, is capable of producing a light-polarizing article comprising a substrate and an ordered structure of a light-polarizing species on a surface of the substrate. Such process comprises the following steps:

(I) providing a template polymer having a defined composition, chain size and chain configuration;

(II) affixing a light-polarizing species to the template polymer in a spatially specific manner; and

(III) contacting the template polymer with a surface of the substrate and aligning the chain of the template polymer on the surface.

As to the template polymer and light-polarizing species, a description was given above in connection with the light-polarizing article of the present invention. As indicated supra, the template polymer may have a certain range of distribution of chain length, composition and configuration. In certain embodiments it may be desired that the template polymer has a relatively narrow range of molecular distribution in one or all of these aspects. Such distribution can be characterized by, inter alia, the polydispersity index as indicated supra. Various chemical and physical approaches can be used to control the composition, chain size and configuration distribution of the template polymer. For example, physical and chemical fragmentation, such as sonication, enzymatic hydrolysis and chromatography such as HPLC (high-pressure liquid chromatography) can be used to provide template polymer materials, such as DNA, with a given range of chain length distribution, average chain length and configuration.

As to step (II), as indicated supra in connection with the description of the light-polarizing article of the present invention, the affixation of the light-polarizing species to the molecules of the template polymer can be effected by physical affiliation and/or chemical reactions with the light-polarizing species resulting in ionic, covalent and/or hydrogen bonds between the light-polarizing species and the molecule of the template polymer. The light-polarizing species, or a precursor thereof, may have, on its molecular structure, one or more functional sites reactive with the chain of the template polymer. Thus, contacting the light-polarizing species with the template polymer under the suitable physical and chemical condition (e.g., by mixing a solution or dispersion of the light-polarizing species or precursor thereof with a solution or dispersion of the template polymer) can lead to the formation of the bonds between them and the affixation of the light-polarizing species to the chain of the template polymer. As indicated in connection with the light-polarizing article of the present invention supra, such bonding between the light-polarizing species and/or precursor thereof with the template polymer can occur at one site on the chain of the each molecule of the template polymer, or may advantageously occur at multiple sites on the chain of each molecule of the template polymer.

The affixation of the light-polarizing species to the template polymer can occur prior to or after the template polymer is allowed to contact the surface of the substrate. Thus, in certain embodiments, step (II) may precede step (III). In other embodiments, step (III) may precede step (II).

In case a metal is desired to be the light-polarizing species for the light-polarizing article of the present invention, in certain embodiments of the process for making such light-polarizing article, it is desired that a metal precursor compound comprising the metal ion is used to contact the template polymer to bond the metal to the template polymer directly, if the template polymer chain comprises active sites capable of directly bonding with the metal ion. If the template polymer does not have active sites capable of directly bonding with metal ions, an ion-associating agent having functional sites capable of bonding with the template polymer may be further grafted to the template polymer before the metal ion is affixed to the template polymer chain. Alternatively, the metal ions may first associate with the ion-associating agent to form a metal complex, and the complex is subsequently allowed to graft onto the chain of the template polymer. In certain embodiments, the metal precursor compound comprises a metal ion that can be bonded with the chain of the template polymer. Upon bonding with the template polymer, the metal ion may be further subjected to a reducing condition

where it is reduced to metallic state. The reduced metal may congregate to form metal nanorods and/or nanowires with desired configuration and dimension for the polarization function.
Contacting the template polymer with the surface of the substrate can be effected by various means such as spin coating, dip coating, flow coating, and brush coating. Alternatively, the template polymer may be spun into a fiber by, inter alia, electrospinning, and then deposited to the surface of the substrate and aligned to form the desired ordered structure providing the desired light-polarizing function to the final product.

The template polymer, if it does not negatively affect the desired performance of the final light-polarizing article, may be retained in the final product. However, in certain embodiments, it is desired that the template polymer and/or other organic materials introduced into the ordered polarizing structure be removed before a final product is formed. In those embodiments, the template polymer can be advantageously removed by, inter alia, high temperature treatment such as calcination in an inert or reducing atmosphere. Where elemental metal is a desired light-polarizing species in the final product, calcination in a reducing atmosphere, such as an $H_2$-containing atmosphere, is particularly advantageous because metal ions can be reduced into metal, and/or because prior reduced elemental metal is prevented from being oxidized.

Alternatively, a light-polarizing article of the present invention may be prepared by depositing, affixing and aligning pre-formed metal nanorods onto the surface of a substrate or forming pre-formed metal nanorods into the bulk of the substrate. Various approaches to making metal nanorods are known. One approach involves the use of a template polymer as described supra in connection with the fourth aspect of the present invention. Non-limiting examples of other approaches that can be used alone or in combination with polymer templating include: micelle based surfactant self-assembly; controlled nanoparticle self-assembly; electrolysis; and combinations thereof.

Description of the nanorods is given above in connection with the light-polarizing article. As to forming nanorods into the bulk of a glass substrate, a process comprising the following steps is contemplated:

(1) providing a plurality of nanorods of an elemental metal;
(2) mixing the nanorods with a batch mixture of a glass material;
(3) heating the material resulting from step (2) to form a continuous glass material having the nanorods distributed therein; and
(4) stretching the glass resulting from step (3) such that the nanorods align inside the bulk of the glass.

A number of methods and strategies exist for synthesis of metal nanorods. In particular, a number of wet chemistry techniques have been reported such as: growth within a porous inorganic substrate, polycarbonate membranes, polymer, biopolymer, electrochemical and surfactant based methods. A particularly well-known surfactant based method is the seed-mediated growth technique. A more recent modification of this technique involves a two step synthesis. In addition, surface based modifications of the seed-mediated growth technique have also been reported. Most recently, a two solvent/surfactant system which offers some control over metal nanorod size and aspect ratio was reported. Typically, the surfactant acts as a capping agent to control the dimensions of the metals formed during the reduction process. These surfactant based synthesis methods may also be combined with metal ion coordinated organo-metallic agents like terpyridine or porphyrin structures. In addition to wet chemistry a number of gas phase synthesis techniques have also been reported. Primet Precision Materials Inc. has described using a high temperature fluid phase centrifugal device to fabricate metallic nanorods. WO2007081876 (A2) describes the use of nano-textured imprinted surfaces as molds for the synthesis of nanoparticles. Other prospective non-wet chemistry techniques for controlled nanorod synthesis may include dip pen nano lithography, molecular beam epitaxis, oblique angle vapor phase deposition and thermal combustion in a gas phase.

Polymer based synthesis of nanorods has been reported. Deposition of silver on polyethylene terephthalate (PET) films was reported. Using self-doped polyaniline (SPANI) to fabricate metal nanorods was also reported.

In the case of biopolymer synthesis of nanorods typically polynucleic acids have provided the most control over structure and size distribution. Metallization of polynucleic acids have been described using several. Use of terpyridine metal ion salts as intercalating agents which associate with the DNA base pairs to yield a seeded growth of metals along the DNA scaffold was also described. In other techniques, nanospherical metals are functionalized to allow for chemical attachment of single stranded DNA which then associates with complimentary DNA. In yet other cases, DNA bases are modified to allow for metal ion retention and are subsequently reduced to ground state metals.

By controlling the process steps for making nanorods, optically active nanorods can be made directly before they are used in this batch-melting process. In certain embodiments, it may be desired that in step (2), the batch mixture comprises a reducing agent capable of inhibiting oxidation of the metal nanorods during step (3). In other embodiments, it may be desired that in at least one of steps (2), (3), (4) and a subsequent step, the nanorods are converted into an optically active state at an interested wavelength where polarizing effect is desired.

In many applications, it is desired that the light-polarizing species is further encapsulated by a protective layer such as a low-melt glass layer, a polymer layer, a spin-on glass layer, and compatible combinations and mixtures thereof.

Such encapsulating protective layer can be formed by, inter alia, chemical vapor deposition, spray coating, sputtering, flow coating, and spin coating.

The following further illustrate the present invention taking DNA templating as a non-limiting example.

The preferred surface for thin film DNA templating is glass, yet other substrates such as plastics may also be equally possible. For polarizers there are three main forms of design: (1) alignment of metal containing DNA of well defined aspect ratio on a surface; (2) alignment of optically active organics onto the DNA of well defined aspect ratio; and (3) formation of long metal strands of the metalized or optically active organics on DNA having inter-strand spacing that enables optical activity. Polymer structures like DNA are aligned or oriented on a surface and used to retain or template either organic or metal structures capable of optically manipulating light. Nucleic acids such as DNA are chosen as the preferred embodiment since it is currently one of the most versatile polymer structure capable of obtaining both desired aspect ratio and alignment on a surface. Specific methods for obtaining defined length DNA, aligning the DNA on a surface and metallizing the DNA are described herein. These aligned nanometer scale structures of well defined aspect ratio can then be subsequently encapsulated within a protective layer such as a stabilizing low melt glass. The process of metallization or association with optically active organic dyes to the template is of a self-assembly nature and is not kinetically limiting for manufacture. The DNA can be pre-metallized or pre-associated with the absorbing species prior to alignment. The process may be repeated in series to provide multilayers of encapsulated structure. The multilayers may impart additional optical properties such as multi-color polarizers or cross polarizers or admixtures such as filters plus cross polarizers. Specific processing techniques are described herein which render the process useful for thin film polarizer fabrication.

DNA is a versatile template which can be obtained from a variety of sources. DNA can be chemically and photochemically synthesized, enzymatically synthesized and extracted from biological sources. The versatility of DNA can be supported by literature studies wherein DNA has known structures that it can be adapted to. DNA can be condensed into toroids, tubes and spheres. DNA can interact with other molecules which result in aggregation, packaging of the structure into compressed structures or helical filamentous structures. Sequence can also be used to control its shape with a great degree of control. That is a level of control that is currently well below electron lithography. The DNA may be synthesized through either enzymatic or chemical synthesis techniques. DNA may also be digested into controlled fragment structures. DNA can also be combined, recombined and evolved into modified structures. For all these reasons, DNA affords the surface modifying scientist with a powerful thin film tool.

DNA can be made in bulk at discrete lengths. Discrete lengths of DNA can be aligned and templated with absorbing moieties or metallized in situ. Aligned DNA on a surface has been shown to demonstrate linear dichroism in the range of 260 nm. The 260 nm absorbance is intrinsic to DNA. Hence, aligned DNA alone with its intrinsic nucleotide absorbance can be used as a thin film polarizer, but only in a limited UV range. It is expected that the association of absorbing moieties onto these structures to be capable of providing a template directed polarization. Alternatively, plasmon resonant metals may also be used to yield polarization properties. Optical polarization may be further achieved over a controlled range of wavelengths by using aligned DNA thin films which are then made to contain absorbing or plasmon generating species. Specific methods are described herein for the alignment of DNA on a surface. Several means exist whereby DNA can be derivatized to contain either an absorbing species or a plasmon generating species. DNA can also be metallized in situ by a number of means. The DNA structure provides a specific nanometer scale length which is desirable for obtaining an optimal aspect ratio for the metal nanoparticles. The DNA that has been functionalized with an absorbing species or metallized may be optically and thermally stabilized through encapsulation using low melt glass coatings or a polymer encapsulation applied by a technique such as photo-polymerization. After encapsulation, subsequent multi-layering of aligned thin DNA films may be implemented in order to give structures having a plurality of novel optical properties such as cross-polarizers and 3-Dimensional polarizers (holographic polarizers).

Details of various steps are given as follows:

1. Preparation of a DNA template of defined shape and size (i.e. length and geometry)

The DNA structures may be of any designed shape including 2D and 3D structures such as linear, spheroids, or cross shaped. The DNA lengths may be discrete single size or may be in distributions which provide the general property of optical polarization when processed into an aligned or oriented thin film. Non-limiting size control techniques for nucleic acids are chromatography (i.e. HPLC/FPLC), electrophoresis, centrifugation and ultra-centrifugation, microfluidics, restriction digests, precipitation, magnetic bead extraction, sonication, primer template selection with PCR and other amplifications technologies.

DNAs are attractive templating agents because for metal structures with these dimensions they can achieve very well defined lengths on the scale required for optical polarizers. The aspect ratios obtainable with DNAs and polymer templating in general are far more controllable than by most other techniques currently available. Other nucleic acids are also possible such as RNA and admixtures or RNA and DNA. In addition, a broad range of manipulations are possible with DNA including: amplification, cleavage, structural condensation and ligation thereby allowing dimensional control. Each base pair of duplex DNA equals 3.4 Å. The persistence of length for DNA as a chain polymer is about 500 Å or 170 bp. DNA sequences as well as denaturing buffers and temperatures can be optimized to minimize self interaction

in order to maintain linearity. Conversely, the sequence of the DNA and buffer conditions can be designed to control the structure into something other than linear. However, AFM analyses of strands larger than 4 kb have been demonstrated and indicate that they can maintain their linear dimension. Four basic prospective structures are of interest for the polarizer application: (1) linear DNA templates; (2) circular DNA templates; (3) cross shaped DNAs for cross polarizers; and (4) three dimensional cube or globular aggregates. These structures may occur naturally through sequence directed self-association or be forcibly designed through covalent chemistry or enzymatic ligation and enzymatic writhe and twist deformation. Physical metrology can be obtained with multimodal detection.

DNA sources: Synthesis and extracts

CPG and Photolithographic synthesis:

Chemical synthesis: DNA can be made by custom synthesis using standard automated synthesizers, reagents such as phosphoramidites and CPG columns. Typically, these as-made synthetic DNAs are limited to 100 bp in length. However, it is possible to conjoin synthetic single stranded DNA (ssDNAs) through bridging or concatamer techniques called splint ligation. This method is useful when in the course of working with templates the researcher requires single stranded templates longer than can be made by conventional synthetic DNAs. For example, one oligo may be conjoined to another oligo by using a bipartite nucleic acid bridge which has one portion of its sequence complimentary to a portion of the first oligo and another portion complimentary to a portion of the second oligo to be conjoined. Photo reactive phosphoramidites are also used for in situ growth of DNA on a surface. Chemical cross-linking between chemical groups on the ends of DNA is possible.

Enzymatic synthesis of ssDNA and dsDNAs

For those applications requiring oligos longer than 100 bp in length one may use enzymatic DNA amplification. Several means exist for doing DNA amplification. Polymerase chain reaction is most common. In this case, 2 short DNA single strands are combined with the strand to be amplified. The two short strands are called primers and they have to contain the same sequence that is complimentary to the ends of the DNA to be amplified. These primers may be modified such as contain thiols or biotin or amine groups. Then the DNAs are combined with a DNA polymerase and dNTP monomers in a buffer. The mixture is then thermo-cycled to produce denaturation, annealing of primers and extension of 3' overhangs. The repeat process is continued until you get geometrical copies of the initial strand ($2^n$ copies where n = cycles). The primers themselves can be used to create 5' end overhangs which are useful in anchoring the amplicons to surfaces or to other amplicons or synthetic DNAs. The primers may also be tagged with modified bases. Alternatively, linear and exponential rolling circle DNA amplification, single strand displacement amplification, QBeta replicase amplification, reverse transcriptase amplification, helicase/DNA polymerase amplification and multiple displacement amplification may all also be used to amplify DNA. Yet another alternative to in vitro synthetic DNA is obtaining DNA from in vivo biological extracts. These DNAs may be extracted by many means and provide useful templates for material design at the nanometer level. Many companies sell kits which enable genomic DNA purification (e.g., Wizard prep's from Promega). Bacteria can produce both genomic DNA as well as plasmid DNAs which can be purified by many means. Other forms of DNA are bacterial artificial chromosomes and extra-chromosomal bodies. Nucleic acids may also contain endogenous enzymatic modifications such as methylation. Similarly, DNA can be modified chemically. Much like splint ligation one can make short duplex DNAs self-assemble into longer concatameric duplex strands by making the ends contain what is commonly termed "sticky ended" DNA. This can be achieved by tailing the duplex DNA with ssDNA extensions that contain a homopolymeric sequence via terminal transferase enzyme (TdT). Terminal transferase will attach monomeric dNTPs to duplex DNAs. To assemble two separate duplex strands one needs only to tail one strand with one of the four known bases (dATP, dTTP, dCTP and dGTP) and the other strand with the complimentary base. For example, duplex 1 is tailed at the 3' ends with poly A while duplex 2 is tailed with poly Ts. The ends will be sticky for each other upon combining. The size can be confirmed on an agarose or poly acrylamide gel.

DNA purification can be made scalable for high throughput extraction. Techniques range from electrophoresis, centrifugation, column extraction, HPLC, FPLC, precipitation, ferromagnetic bead extraction, and membrane filtration. These methods may be selected and optimized for each individual type of DNA being used.

DNA sizing

DNA lengths are largely a result of their source. Synthetic DNA lengths are well defined by their synthesis. Long synthetic oligos often contain failure sequences which can be purified further by gel electrophoresis or HPLC. Extracted DNA purified from cells may reach higher than megabase lengths depending on the genome. Digested by restriction enzymes can be done to reduce the lengths to discrete size ranges. Restriction enzymes cleave DNA strands, both ssDNA and dsDNA, at specific sequence locations depending on their mechanisms. Cocktails of restriction enzymes may be used to achieve desired lengths.

Admixtures of photolithographic Synthesis or chemically synthesized nucleic acids with bridged solution based synthesis

Photo-lithographically synthesized DNAs may be subsequently extended using solution derived DNAs in order to lengthen the DNA on a surface. Modified nucleic acids such as PNAs, RNAs, LNAs, psoralen labeled, amine and thiol labeled, fluorophore labeled, and speigelmers may also be combined to photo-lithographically derived DNAs on a

surface. The photolithography may be used as "locator" or "guide sequences" on the surface.

2. Templating of organic or metallic species with a defined size and shape

An exemplary aspect ratio for metal components in a glass blue polarizer is about 20 nm wide by 70 nm long. The preferred metal for making a blue polarizer is aluminum. Hence, a DNA duplex strand that contains complex metals (such as gold, aluminum) of the above mentioned aspect ratio (70 nm in length = 205 bp dsDNA) can be made. Such lengths are easily obtainable through a number of means as described above. The width of in situ metallization by adducts is roughly 2 nm. However, control over the adduct design or reduction time along with solution conditions may allow better control of the width. Metal nanoparticles of well defined size are obtainable commercially. In these cases, direct templating into the structure would be required. The DNA may be pre-associated with optically active organic polarizing species or metals prior to contacting on a surface. Spacer agents may be added, such as polylysine or nucleic acid binding proteins.

Optical Thin Films using DNA

Aligned thin films of unmodified "native" DNA have been known to exhibited linear dichroism and polarization at the intrinsic absorbance range of 260 nm and the infrared region since the 1970s. However, the absorbance or fluorescence of DNA may be altered by attaching absorbing species to the DNA. The attachment process can include (1) photo-cross-linking; (2) association to the DNA structure via steric, ionic, hydrophobic interactions (e.g., metal ions, ethidium bromide, YOYO stains, TFO associations and protein or peptide "aptamer-like" binders such as antibodies and single stranded DNA binding proteins or even hapten binding proteins like streptavidin to biotinylated DNA); (3) chemical conjugation and cross-linking such as the use of amine reactive absorbing organic dyes to amine containing DNA; and (4) a fourth way that DNA may be altered optically "organically" is through chemical derivitization of the DNA bases itself. The surface based derivitization of aligned DNA is one way to introduce polarizability to the surface over a defined spectral region. For pure inorganic polarizing products, it is possible to "calcine" or bum away the nano-structured metals with aligned "holding" polymer film to retain only the inorganic phase for optical polarization and subsequent low melt glass encapsulation.

Metallization of DNA

Metalation or metallization of DNA refers to the process of bonding metal directly to DNA. Metallization of DNA is yet another means by which one can convert DNA into a polarizing agent by imparting a surface plasmon resonance and refractive index via controlled aspect ratio. These metallized DNAs may then be further processed into or on the DNA films. Subsequent encapsulation of the oriented polarizing thin films with low melt glass can stabilize the metal from a variety of environmental stresses such as oxidation of the metal or thermal disruption of the templated aspect ratio. The introduction of metals into or onto DNA templates can provide a thermal stability beyond organic components and may allow higher Tg low melt glass encapsulations. In the literature, DNA metallization has included several elemental metals such as Pt, Ag, Au, Pd, Cu, Ni, Ru, Os, and Ir. A range of methods exist in the literature which enable metallization. Metallization can occur through:

(1) direct templating of DNA conjugated pre-formed metal nanoparticles to DNA templates

(2) chemical cross-linking of pre-formed nanoparticles terminated with functional groups (3) in situ metallization by growth via reduction of metal ion adducts to adenine and guanine (4) metal ion-adducts which inter chelate on the DNA structure (5) metal on metal in situ growth such as gold on silver or silver on gold templating see GoldEnhance® (Nanoprobes Inc.) (6) recA induced insertion of DNA labeled nanoparticle pre-forms (7) reduction of metal ion associated in minor grooves of DNA. The growth of the metals on the DNA can range from 1.5 nm to 100 nm. Also some processes may yield continuous metallized features or nanorods while others yield metal cluster size variation. In some instances the DNA template for the metal nanoparticles and structures may be sacrificed in order to fuse together the discontinuous "beads on a string" like growths. The metal fusion process may involve introduction of chemical treatments or energy exposure of the polymeric templated metals to such treatments like electronic current flow, electrolysis, heat treatment, microwave treatment, and infrared laser treatment. For example, focused microwaves may be passed over the metal templated polymers to bum away the organic phase and fuse or "neck together" the metal nanoparticles in a controlled inert environment.

Chemical modification of the DNAs for metal incorporation: One example given is thiol incorporation into DNA

In certain embodiments, it may be desired to incorporate gold structures into the DNA. Thiol groups are useful as a means of associating gold nanoparticles onto DNAs. Gold nanoparticles can be obtained as unconjugated or conjugated nanoparticles. The direct association of gold nanoparticles to thiolated DNA is known. Several methods exist for incorporation of a thiol group into DNA structures using enzymatic processes. Synthetic primers can be used to introduce thiols as end labeled primers. Modified base incorporation using nucleic acid incorporation may also be done using enzyme copying such as PCR, RCA, MDA, helicase-PCR and nick translation using modified bases. In these techniques, an amine containing dUTP base is incorporated into the amplified DNA strand by use of the enzyme. A common base that is incorporated into the DNA is amino allyl dUTP. Several alternative techniques also exist for

incorporation of thiols or other structures into a duplex structure. First, associative techniques are possible. In this case, a duplex recognizing agent that contains a thiol group is allowed to associate in a periodic fashion along the length of the DNA. One example is thiol modified psoralen. Psoralen selectively binds to regions of duplex DNA. Thiol containing psoralen can be made by reacting amine Psoralen with Traut's reagent to convert primary amine groups into thiol groups. Alternatively, direct incorporation using the Ulysis™ DNA labeling kit from Molecular Probes may also be possible. Yet another means for incorporating thiol DNAs into duplex strands is with the use of either strand exchange reactions via recA like proteins or by means of triplex DNAs which have thiols within their structure. Any of these means may be used for incorporating thiols yet it is equally important to recognize that these techniques may also be used equally well for incorporating other materials into DNA. Even peptide aptamers which chelate metal ions (for reduction to ground state metals) may be decorated onto a DNA scaffold. Alternatively, fully formed metal structures such as metal nanoparticle or metal nanorod may also be retained by affinity capture to a templated DNA structure.

3. Contacting and aligning the DNA templated structure on a surface

The surface may align the DNA or the DNA may be aligned by other means. Any surface can be used, including porous, 2D, plastic, metal, microparticles, nanoparticles, nanorods, microrods, electrospun nanofibers, polymeric, liquid crystals, crystals, synthetic sapphires, diamonds, mirrors, ceramic, glass ceramic, inorganic polymers, hybrid inorganic and organic surfaces etc... DNA, RNA or PNAs, modified nucleic acids (e.g., spiegelmers, psoralen DNAs or LNAs) and recA ssDNA filaments may be located on the surface prior to contacting the templating DNA. The pre-attached nucleic acids may also be used to align and fix the DNA. The surface may contain photo -resist features to aid alignment. If the aligned DNA is not pre-templated with the optical material it may be templated in situ provided the DNA is stable. Fixing the aligned DNA on the surface may be achieved by a number of means such as chemically cross-linking by vapor deposition or reactivity with the DNA to the surface by standard reactive silanes such as glymo or photo-cross-linking agents like psoralen. Complex admixtures of reactive and charged silanes may also be useful in fixing the nucleic acid on the surface (e.g., charged quaternary amines plus glymo).

Alignment and orientation of DNAs

A sequence of nucleic acids can result in two and three dimensional structures. Nano-grids of DNAs have been reported in the literature. DNA (including grid structures of DNAs) can be retained on surfaces through a variety of physical means such as charge attraction, covalent coupling. So, a number of means exist using sequence driven complimentarity as a tool for making grid like aligned structures. Other than sequence there are also a number of physical means by which the DNA material may be aligned on a surface. Several methods are described below which may also be adequate enough for enablement of DNA alignment.

Alignment methods #1: Polymer directed aligned coatings of DNA on a surface

DNA alignments on surfaces bearing special polymer coatings such as polyvinylcarbazole and polyphenazasiline. In these techniques, aspirating the DNA solution back and forth across the polymer coated surface can create an air-liquid interface capable of stretching and aligning DNA on the spin coated polymer surfaces. The air-dried DNA is not itself covalently attached to the surface. However, combining covalent conjugation techniques to the surface using a polymer that is coated over a silane layer like glymo or amine containing can allow covalent retention of the DNA. That is to say that a surface may be first contacted with a silane (such as 3-glycidyloxypropyltrimethoxysilane or an amine containing silane such as GAPS) and then spin coated over with the aligning polymer (e.g., polyvinylcarbazole). Alternatively, other polymer combinations can also be efficacious in controlling the DNA/polymer alignment. For example, chitosan or EMA may be coated first then followed by poly vinylcarbazole. In addition, DNAs, DNA binding peptides or proteins can be used as coat layers which are then coated over with the aligning polymer. DNA template is then applied and drawn over the surface to assist in alignment. The glymo can form covalent bonds to amines in the DNA. Alternatively, one can use glutaraldehyde to couple the amine groups in the DNA to amine groups in the GAPS silane coating. For example, a diblock copolymer (polystyrene-b-poly (methyl methacrylate) or PS-b-PMMA can be used to align DNA on a surface. The process of either dragging or aspirating a drop of liquid with DNA across a surface has been termed molecular combing. Alternative modifications of the aligning process may include heat effects, chaotropic solvents, solvents which best deposit the aligning polymer, co-depositing the DNA with the aligning polymer, flow effect, cross-linking effects, and photo-cross-linking effects.

Modified silanes may be derivatized to offer alignment properties. One such example is silanes derivatized with psoralen. Psoralen is a photo-cross-linking agent capable of covalently coupling to thymine. For manufacturing reasons it may be preferred that the "template-able" polymer (e.g., DNA) is drawn across the aligning polymer coated surface using other processes. One example is an air-knife. In this case, the DNA solution is unidirectionally drawn across the slide by flowing air at a controlled rate. The process may be repeated over and over until a desired degree of alignment coverage is achieved. The density of the DNA templates may be controlled by dilution effect. Inter-strand spacers may be used wherein polymeric agents (e.g., chitosan) or biological additives (anti-DNA antibodies or streptavidin) are used to associate with the DNA templates to further control desired interstrand template spacing. Similarly, spin coating the DNA over the slide in a radial manner may be possible. Other techniques involve Langmuir blodget trough coating or controlled dips into DNA baths. Other forms of fluid (liquid-air interface) flow across aligning-polymer

coated surface may also be used such as micro fluidics. Again as before, DNA is one preferred embodiment of a controlled well template-able polymer. However, other polymers may also be possible with any of these techniques.

Alignment methods #2: Molecular Combing to align DNA

DNA has also been reported as "alignable" using what is commonly referred to as molecular combing. In molecular combing, DNA is dipped into a capillary needle and the needle is drawn across the slide to stretch and draw out the DNA on the surface. This same process may also be applied for placement of DNA on a glass or plastic surface. One may obtain a similar dispersion of DNA across a surface by a wire-catter method wherein a wire is used to drag the DNA solution across the polymer coated slide.

Alignment methods #3: Magnetic field alignment

It was reported conducting magnetic fields can be used to align DNA films. Magnetic field alignment of polymers is thought to occur through diamagnetic anisotropy. Carbon nanotubes and proteins have been aligned using magnetic fields. Just as DNA can be aligned in a magnetic field it is a general statement that this same approach can be used to align other polymeric films that are also (1) capable of polarizing light; and (2) capable of being encapsulated with low melt glasses. Cryogen-free superconducting magnets (e.g., JASTEC 10T) can create a homogeneous magnetic field over a 40 mm square space producing Tesla fields ranging from 2, 4,6, 8 and 10 T. The magnetic fields may be applied in horizontal or vertical directions while the DNA samples are allowed to dry. Horizontal fields have been shown to induce aligned DNA films. The magnetic metal containing DNAs may be used to align the correct aspect ratio DNAs within a magnetic field.

Alignment Method #4

DNA films can be made from just DNA alone by air drying without the aid of external magnetic fields. Random DNA films can be made by depositing a gelatinous form of the DNA directly on a solid substrate and allowing it to air dry over time. The gel state is formed by mixing the DNA with a 3M solution of sodium acetate and 80% isopropanol. For short DNAs (<3 Kb) the gel state at low concentrations does not normally form from short DNAs normally do not show alignment. Large DNA strands (>20 Kb) have been reported as able to form densely packed DNA films with polarizability. The technique uses again the gelled form of DNA that is then drawn into a string like extrusion and spooled in "wet form" onto a glass substrate and then air dried. Typically high salt solutions are used. It has been reported that high concentrations of short DNAs (<2Kb) will form well aligned and polarizing films when concentrated to 100 mg/ml in the gelled state and air dried under controlled humidity. More recently, it has been reported forming aligned DNA films using short DNAs that are self polymerized via UV irradiation. In principle these technique demonstrate that DNA as a polymer can condense from soft wet matter into a well packed periodic structure. This same process should also be possible for many other polymers. Hence, many polymers may be used to form the closely packed and aligned films. These "film" forming polymers may be co-mixed with the metallized DNAs or organic templated DNAs to allow aligned film formation. Carrier polymers may be used such that when dried they form a well packed film of the "doped" DNA templates. The carrier polymers films may be used in a number of ways for subsequent processing treatments without limitation. They may be used as passive air drying film agents or may form aligned films using photo-cross-linking. Other possibilities are deposition by vapor or laser ablation or evaporation. Light itself may also control the condensation of the carrier polymer. Spacer polymers like chitosan may be used to control inter-strand spacing of the metallized DNAs.

Alignment method #5

Electro-spinning

An electro-spinning apparatus 401 is schematically illustrated in FIG. 4, comprising: a DNA solution supply device 403 having a negative electrical potential (-1000 volts, for example); a needle probe 405 connected to 403 in close proximity to an electrically grounded rotating substrate 409. DNA fiber 407 is formed at the tip of the needle probe and received and collected by the substrate. The metallized DNAs may be dispersed into a "carrier" polymer and spun onto a grounded plate using a process known as electro-spinning. A typical mixture that should be capable of electro-spinning metallized DNA or pre-metallized DNA is: 20 mg/ml poly L-aspartic acid, 20 mg DABCO (anti-photo-bleaching agent), PEO polymer 200 mg/ml and DNA at 0.5 mg/ml or more. The distance of separation between the receiving plate and the conducting gold microfab needle is approximately 3 cm. A spooling process may be done with stepper motors to form concentric circular deposited DNA doped PEO. A typical anticipated voltage is around 10,000 volts. Other spacing agents like chitosan may be included.

Many additional methods may be suitable for alignment of the templating polymer, such as electric field alignment, photoelectric field alignment, optical tweeze alignment, radiofrequency alignment and any possible admixture of combined external force. It is also contemplated that a surface with nano-etched grooves can be constructed wherein the metallized polymer is deposited into long continuous grooves of a solid substrate. Such grooves may be spaced by 20-100 nm so as to provide sufficient polarization selection. Agents either on the surface or added to the DNA templates may also be used which offer local electric or magnetic fields to the metallized DNA for subsequent alignment on the surface. Complex inorganic and organic surface modifications are possible using amphiphilic block co-polymers self-assembly. Conceptually, these surfaces and any other surface modification may be possible for assisting the alignment of either the alignment polymer or the DNAs. Even carbonized surface structures may be used. Microarrays of capture

probes for assembled grids are also contemplated. Yet another possibility is the deposition and evaporative drying of the correct aspect ratio metallized DNA onto or inside a solid substrate with the intent to stretch the substrate after the application of the necessary heat required to draw out and stretch the substrate. A. Rupprecht (Biotechnology and Bioengineering, Vol. XII, pg. 93-121, 1970) has also described a method for preparing highly oriented thin films of naDNA or LiDNA using a wet spun DNA process. Briefly, a gelatinous concentrated DNA salt solution in a water alcohol solution is drawn by fiber onto a solid substrate by spooling the strands on a mandrel like spooling apparatus. These spooled DNA fiber surfaces become gelled or fused as they dry yielding highly oriented films capable of polarization. These oriented films of DNA have been reported to be polarizing (see Rupprecht. Biochim Biophys Acta. 1970 Jan 21; 199 (1):277-80). Again the DNA (or DNA with spacer agents like poly lysine) or any templatable polymer used in these filming processes may be metallized or derivatized with absorbing entities to produce controlled optical properties such as wavelength specific polarization. More recent efforts may also be obtained with electro-spun DNA films. The aligned templated DNAs or polymers may then be encapsulated with low melt glass or polymer and or any other encapsulating material.

Concatamer techniques for Grid assembly or special extension of DNA templates

Alignment of PCR amplicons (or sonicated DNA extracts) strung together may also be useful. Introduction of sticky ends into DNAs by terminal transferase (TdT) tailing to make metal regions with well defined inter strand spacing or by controlling the primer overhangs with TdT tailing. The "stringing" together process may be used to provide alternating metal and non metal spacing. Briefly, PCR amplicons are tailed with sequences which are connected by an oligo bridge. This first scaffold may now be associated with adducts to form long pre-metal regions. Then the conjoined pre-metal templates are spatially separated by inter strand spacers with ends complimentary to the sticky overhangs.

Encapsulation and stabilization of optically active structures

The optically active nanometer structures can be stabilized by encapsulation in low melt glass ("LMG") or with plastics or polymers. Many composition and deposition techniques are possible with the LMG. Selection of the time of coating, RF frequency, energy of the field, ionizing gas compositions and composition of the LMG itself are all variables that may be optimized. The first layer encapsulation process may be repeated over and over for several layers.

Encapsulation of polymer templated metals using low melt glass

The organic or metal agents once templated onto the polymer thin films like DNA can be subsequently encapsulated by thin film deposition of low melt glasses in order to yield a more stable structure. Any DNA templated material can be protected from external stresses such as heat and oxidation by this method. The low melt glass materials may be coated by a number of means including "Green" compositions. However, the compositions may be optimized to favor the final process wherein a desired percent transmittance between the various layers is required. For example, a 4 micron thick layer of a tin fluoro-phosphate glass has been used to encapsulate metallized DNA and fluorescent labeled YOYO-1 DNAs on slides without any significant alteration to the DNA, the metal, the fluorescence or its observed alignment. This particular encapsulation offers stability up to 85°C. Hence, those encapsulating layer compositions may be adjusted accordingly. These thin film coatings of low melt glasses can significantly stabilize thin film polymer coatings. Selection of the material composition of the LMG for deposition may be based on optical transmittance or compatibility with organic templates on the surface. FIG. 5 schematically illustrates the set-up 501 of a LMG deposition apparatus. In this coating process, a low melt glass plug 511 is located onto a charged radio frequency base 509. The nano-templated substrate, 505 and 507 located opposite the plug in a vacuum chamber 503. The chamber 503 is filled with an ionizable gas which then bombards the low melt glass plug 511 at some frequency. Energy of ionized gas bombardment on the low melt glass plug 511 is sufficient to send the low melt glass material toward the surface of oppositely charged substrate 505 and 507. A number of compositions of low melt glass can be deposited over the templated material 507. The metal templated material 507 should be capable of being encapsulated at higher Tg glass compositions than the organic templated compositions. Multiple layers of polymer templates may be made to provide diverse optical properties. For example, a cross polarizer can be produced by controlling the direction of templated materials over successive multilayers.

All of the encapsulated optical films described herein can be assembled into a number of interfacial assemblies which combine or improve the physical attributes. Circular polarizers, filter combinations and mirror polarizers are all possible. In addition, it is contemplated that a wide range of other manipulations may also be applied to modification of the DNA for optical templating. For example, dip pen nanolithography, optical tweezers, electrophoresis, AFM deposition, electroplating, plasma induced polymer synthesis, molecular beam epitaxis, Langmuir Blodgett trough techniques can be implemented in various ways to modulate the DNA and DNA templated structures.

EXAMPLE: Preparation of a polarizer

The selection of aspect ratio for a metal based polarizer depends on the wavelength of light to be polarized and the metal (or combination metals) that is doing the polarization. For a polarizer using a silver nanorod we would require an aspect ratio of 1:5 (width to length aspect ratio). Knowledge of the extent of DNA metallization for each process used is required to ensure the correct aspect ratio. For the metal adduct metallization technique a DNA duplex that is roughly 10 nm long is used assuming each metallization grew to about 2 nm. The base pair length calculation is

10 nm divided by 0.334 nm/base or 30 base pair long duplex. Such DNAs are easily made synthetically however procurement using purification techniques for raw extracts also are possible such as HPLC, centrifugation and electrophoresis. If other metallization techniques were chosen whose particle growth or size or templated size exceeded 2 nm then longer duplex DNAs is required. For example, the Goldenhance™ reagent from Nanoprobes, Yaphank, New York, U.S.A. is expected to grow gold metal particle sizes around 20-100 nm in roughly one hour synthesis time. For 20 nm particles of gold or silver the length of 70 nm to 100 nm would likely be required (or DNA that is 250-300 bp long). Another general factor to be considered is particle density. Metal nanoparticle density needs to be sufficient to modulate light transmission. The particle density may be contained in an applied single film or one can use multi-layering of the films layer by layer which are stacked between low melt glass encapsulated films.

Procedure No. 1:

- To a 1mg/ml of DNA solution (20 mM HEPES, pH 8.0 and DNA length 30 bp = 10 nm) add 2 mg/ml of aluminum ion terpyridine adduct and allow the adduct to react overnight with the DNA at room temperature.
- Pass the adduct-DNA solution over a PD-10 gel filtration column to isolate pure adduct labeled DNA. Collect 2-3 mls.
- Speedvac the 3 mls to 1ml
- Add 500 μL of 30 mg/ml of sodium borohydride in 100 mM Borate pH 9.2. Allow 4 hours to react. A white precipitate should form.
- Clean up the metal nanorods using centrifugation. Decant the supernatant.
- (OPTIONAL) If the DNA length in step 1 was 300 bp long then thicker nanoparticle formations may be required. To achieve this apply Goldenhance solution according to manufactures instructions to enable shell of 20 nm gold to form around the metal nanorod pre-form from step 5.
- Purify the nanoparticle using centrifugation.
- Combine the metallized DNA with long DNA 1 mg/ml. Approximate volume is 1ml and may need to add LiCl or NaCl to adjust ionic strength. (May use UV cross-linking to fix DNA together)
- Add 1 ml 3 M sodium acetate pH 5.2.
- Add 1 ml 80% cold isopropanol.
- Allow time for a gel to form.
- Draw the metallized DNA solution into a strand by contacting the solution with a glass rod.
- Spool the DNA around a glass slide until the gel strand form a continuous overlap over desired coverage.
- Place slide in a controlled humidity chamber overnight until film is dry. Note that one may substitute the "DNA" carrier polymer for another polymer which upon drying collapses to an aligned film. Also control over the drying process may be included a range of process categories such as vacuum oven drying or flowing nitrogen or air.
- Slide or surface is then placed into a vacuum chamber like figure 6 for low melt glass encapsulation.

Procedure No. 2

- Load a 0.5 % Agarose gel 1x TBE (with gelstar dye) with metallized DNA of desired aspect ratio. The agarose gel is immersed in 1x TBE buffer running electrophoretic trough. For complete throughout gel coverage one may use a continuous loading of the metal templated DNAs
- Apply a 100 volt current to draw the metallized DNA into the gel exactly as is always done in molecular biology. Let run for one hour.
- Remove gel Image the gel for location of the DNA
- Take a razor blade or scalpel and cut out the gel region holding the metallized DNA and place onto a glass slide (e.g 1737 or Eagle)
- Put gel with slide in an vacuum oven for 1 hour at 60-70 oC
- Remove gel and image collapsed film on a double polarizer box and take photo. Bright light occurs where aluminum metal is upon rotation the brightness disappears.

The above procedures may be repeated, mutatis mutandis, to prepare multi-layer structures that may provide cross-polarizing functions.

It will be apparent to those skilled in the art that various modifications and alterations can be made to the present invention without departing from the scope and spirit of the invention. Thus, it is intended that the present invention cover the modifications and variations of this invention provided they come within the scope of the appended claims and their equivalents.

## Claims

**1.** A light-polarizing article comprising:

(a) a substrate; and
(b) an ordered structure on a surface of the substrate consisting essentially of a plurality of aligned elemental metal nanorods having a length/width aspect ratio of at least 3: 1, and a width of greater than 2 nm.

**2.** A light-polarizing article according to claim 1, further comprising:

(c) a protective layer encapsulating the ordered structure.

**3.** A light-polarizing article comprising:

(A) a substrate;
(B) a plurality of aligned elemental metal nanorods having a length/width aspect ratio of at least 3:1, and a width of greater than 2 nm, distributed throughout the substrate, providing the light-polarizing function.

**4.** A process for making a light-polarizing article comprising a substrate and an ordered structure of a light-polarizing species on a surface of the substrate, comprising:

(i) providing a plurality of nanorods of an elemental metal;
(ii) affixing the nanorods onto a surface of the substrate, and aligning them in a spatially specific manner such that the aligned nanorods are capable of providing light-polarizing properties at the interested wavelength.

**5.** A process according to claim 4, wherein the nanorods in step (i) have a length/width aspect ratio of at least 3.

**6.** A process according to claim 5, wherein the nanorods have a width from 2 nm to 500 nm.

**7.** A process for making a light-polarizing article comprising:

(1) providing a plurality of nanorods of an elemental metal;
(2) mixing the nanorods with a batch mixture of a glass material;
(3) treating the material resulting from step (2) to form a continuous glass material having the nanorods distributed therein;
(4) stretching the glass resulting from step (3) such that the nanorods align inside the bulk of the glass.

**8.** A process according to claim 7, wherein in step (2), the batch mixture comprises a reducing agent capable of inhibiting oxidation of the metal nanorods during step (3).

**9.** A process according to claim 7, wherein in at least one of steps (2), (3), (4) and a subsequent step, the nanorods are converted into an optically active state at an interested wavelength where polarizing effect is desired.

**10.** A process according to claim 7, wherein the nanorods have a length/width aspect ratio of at least 3.

**11.** A process according to claim 10, wherein the nanorods have a width of from 2 nm to 500 nm.

FIG. 1

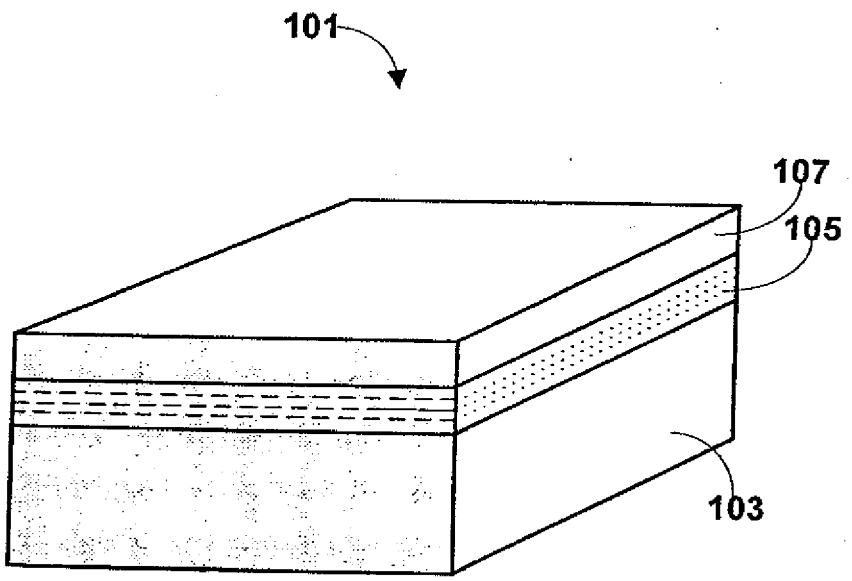


FIG. 2

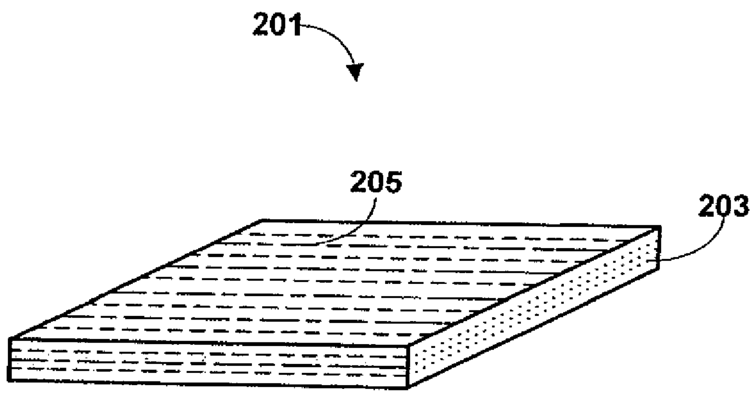

FIG. 3

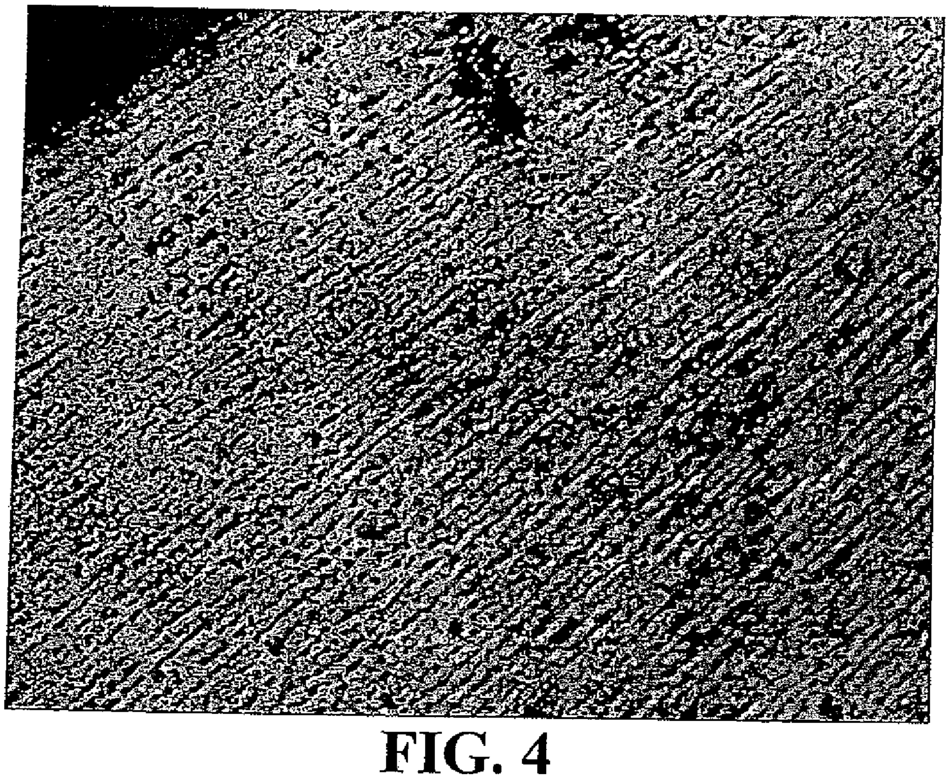

FIG. 4

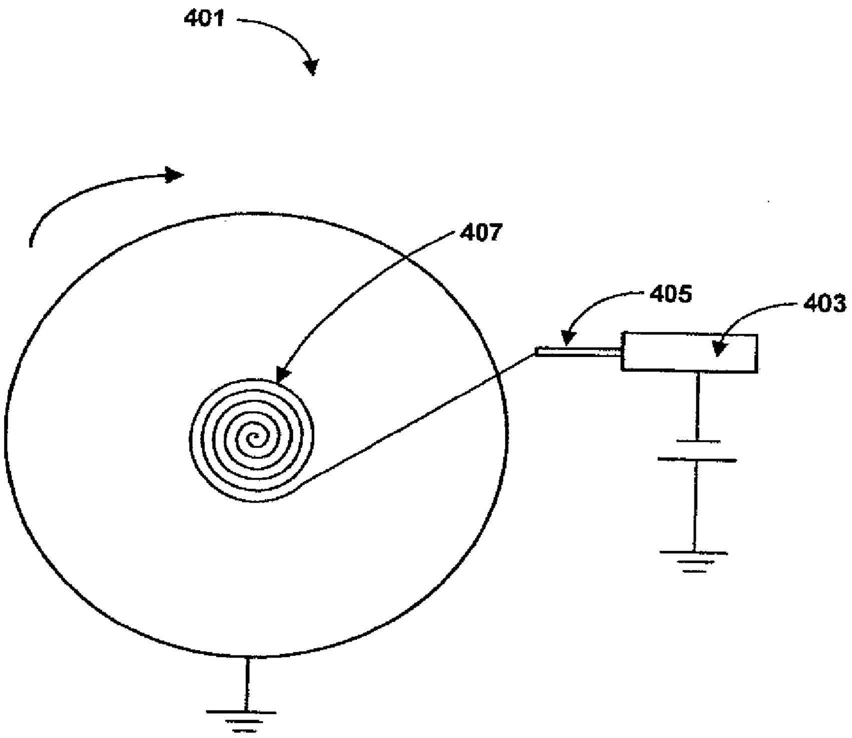

FIG. 5

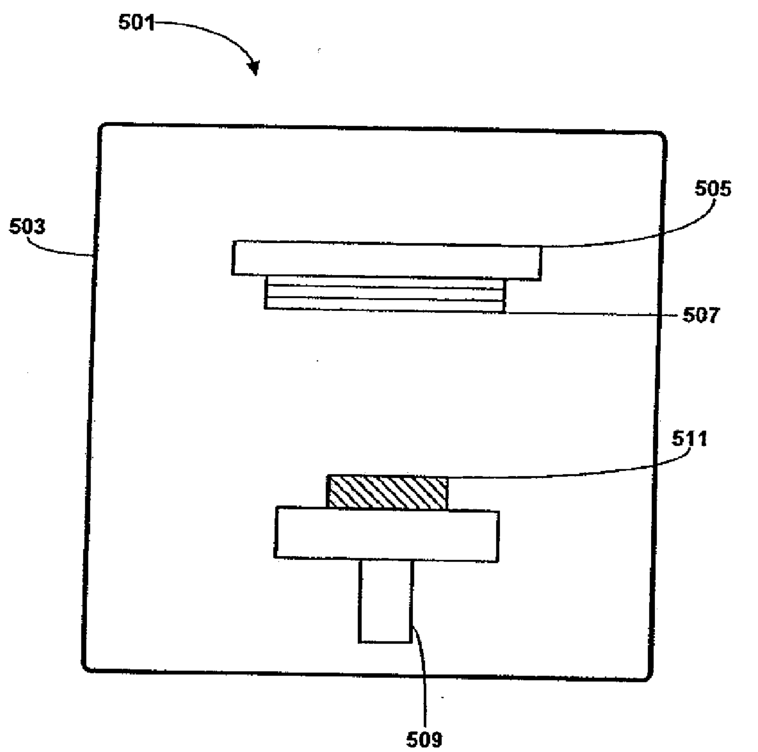

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 89789907 A
- WO 2007081876 A2


### Non-patent literature cited in the description


- **RUPPRECHT.** *Biochim Biophys Acta,* 21 January 1970, vol. 199 (1), 277-80